# EUROPEAN PATENT SPECIFICATION

(11) **EP 4 466 179 B1**
(45) Date of publication and mention of the grant of the patent: **17.12.2025**
(21) Application number: 23701005.3
(22) Date of filing: 16.01.2023
(51) Int. Cl.: B63B 1/28

(54) **WATERCRAFT WITH HYDROFOILD ADJUSTMENT ARRANGEMENT COMPRISING TRUNCATED HEAD**
WASSERFAHRZEUG MIT TRAGFLÜGELARTIGER EINSTELLANORDNUNG MIT ABGESCHNITTENEM KOPF
EMBARCATION DOTÉE D'UN AGENCEMENT DE RÉGLAGE D'AILE PORTANTE COMPRENANT UNE TÊTE TRONQUÉE

(30) Priority: 17.01.2022 SE 2250036
(43) Date of publication of application: 27.11.2024
(73) Proprietor: Candela Technology AB, 115 56 Stockholm (SE)
(72) Inventor: WEST, Ivan Anagrius, 168 40 BROMMA (SE); PHILIPPOT, Olivier, 29570 Camaret sur Mer (FR); HASSELSKOG, Gustav, 114 48 STOCKHOLM (SE); BONDE, Claes, 115 27 STOCKHOLM (SE)
(74) Representative: Bjerkén Hynell KB
(86) International application number: PCT/EP2023/050844
(87) International publication number: WO 2023/135290

(56) References cited:
- SE-A1- 1 751 183
- US-A- 3 141 437
- US-A- 3 465 704

## Description

### TECHNICAL FIELD

Embodiments herein relate to hydrofoil watercrafts, such as boats, ships, pleasure marine vessels or the like with one or more hydrofoils. In particular, it is herein disclosed a hydrofoil watercraft with a hydrofoil adjustment arrangement arranged to adjust an angle of attack of said one or more hydrofoils.

### BACKGROUND

For marine vessels, for example pleasure boats, the advancement may, if enough power capacity is available for its propulsion, be transformed from a displacement advancement to a planning advancement. By means of hydrofoils, a watercraft can assume a foiling advancement. The hydrofoil, or hydrofoils, is typically connected to a hull of the watercraft by means of struts. During the foiling advancement, the hull is lifted out of the water and spaced apart from the water surface. Depending on whether the watercraft is equipped with a fully submerged hydrofoil or a surface piercing hydrofoil, the hydrofoil is generally traversing below the surface, typically at some desired depth, or generally traversing at or on the surface. With both fully submerged and surface piercing hydrofoils, less power is required for driving, or advancing, the watercraft.

SE1751183A1, to the present applicant, discloses a system for the control of a support plane, such as a hydrofoil, belonging to a support plane boat, such as a hydrofoil watercraft. The angle of the support plane in the water is adjustable by rotating the support plane legs about an axis of rotation common to the support plane legs in the boat. The system comprises a holding device in the outer end of the respective support plane legs whereby the support plane is held by the support plane legs. The respective holding device is designed so that in its attachment of the support plane it prevents a rotational movement of the support plane about its own axis. The respective holding device is designed so that in its attachment of the support plane it allows an axial movement of the support plane along its own axis, and allows a rotational movement of the support plane about an axis perpendicular to the support plane.

Even though, the solution of SE1751183A1 may have its benefits and advantages, such as that forces due to the bending of the support plane about the axis perpendicular to the support plane are reduced, the struts are nevertheless exposed to considerable forces due to bending of the support plane. This may cause undesired wear and tear, which ultimately may lead to that the struts, or any fastening mechanism for the struts, become damaged or even destroyed.

US 3 141 437 A discloses a similar system for the control of a hydrofoil for a watercraft.

### SUMMARY

An object may be to eliminate, or at least reduce, one or more the abovementioned disadvantages and/or problems.

According to an aspect, there is provided a hydrofoil watercraft comprising a hull, a hydrofoil arranged to allow the hydrofoil watercraft to be advanced in a foiling advancement in which the hull is spaced apart from a water surface, and a hydrofoil adjustment arrangement.

The hydrofoil adjustment arrangement is arranged to adjust an angle of attack of the hydrofoil by a primary rotation of the hydrofoil about a first rotation axis parallel with a pitch axis of the hydrofoil watercraft. The hydrofoil adjustment arrangement comprises: two struts connecting the hydrofoil to the hull, and a respective truncated head, connecting each strut of the two struts to the hydrofoil. The respective truncated head is arranged to allow at least the primary rotation and a secondary rotation about a second rotation axis parallel with a roll axis of the hydrofoil watercraft. The respective truncated head is adapted to be accommodated within a width of the respective strut at, and preferably along, the first rotation axis by that the respective truncated head is truncated perpendicularly to the first rotation axis.

Thanks to that the respective truncated spherical element, or head, is arranged to allow the secondary rotation, a reduction of forces due to bending of the hydrofoil in a plane perpendicular to a direction of straight forward travel is achieved. An advantage is thus forces, that the respective strut is exposed to, are reduced. As a result, strain, or load, on the struts is reduced.

In some embodiments, the respective truncated head is partly enclosed by a first portion of the respective strut. The first portion forms at least a part of a socket adapted to accommodate the respective truncated head, preferably in a form-fitted manner. An arm of the head extends through the first portion. The arm is fixedly connected to the respective strut when the first portion is fixedly connected to the hydrofoil or wherein the arm is fixedly connected to the hydrofoil when the first portion is fixedly connected to the respective strut. In this manner, a joint is formed by the socket and the respective truncated head. Thanks to the first portion, which is fixedly connected, the joint's resistance to pull-out forces is improved

In some embodiments, the respective truncated head presents a first area in a first cross-section, perpendicular to the roll axis and through the center of the respective truncated head, that is less than a second area in a second cross-section, perpendicular to the pitch axis and through the center of the respective truncated head.

An advantage of the respective truncated head is that the strut may maintain a slim and streamlined shape.

In some embodiments, the respective truncated head is truncated by two planes. The two planes are perpendicular to the first rotation axis. The two planes are located at opposite sides of a central plane of the truncated ball joint. The central plane is parallel to the two planes. A distance between the two planes is adapted to fit the respective truncated head within the width of the respective strut. In some examples, the two planes are truncating the head in a symmetrical manner with respect to a center of the respective truncated head.

In some embodiments, the hydrofoil adjustment arrangement comprises a respective adjustment rod, running in the respective strut. The respective adjustment rod is arranged to adjust the angle of attack of the hydrofoil by being connected to the hydrofoil at a distance from the respective head and movable in a longitudinal direction of the respective strut to cause the primary rotation. Accordingly, the longer the distance is, the smaller the force required for the primary rotation is.

### BRIEF DESCRIPTION OF THE DRAWINGS

The various aspects of embodiments disclosed herein, including particular features and advantages thereof, will be readily understood from the following detailed description and the accompanying drawings, which are briefly described in the following.
Figure 1 is a schematic overview of an exemplifying watercraft in which embodiments herein may be implemented.
Figure 2 is a partial sideview of the watercraft of Figure 1.
Figure 3 and Figure 4 are partly sectioned, perspective views, illustrating an example of a detail of the watercraft disclosed herein.
Figure 5 is a cross-sectional view of the detail of Figure 3 and Figure 4.
Figure 6 is a side view of the detail of Figure 3 and Figure 4.
Figure 7 and Figure 8 are schematic side views of examples according to the embodiments herein.
Figure 9 and Figure 10 are cross-sectional views of the head comprised in the embodiments herein.
Figure 11 and Figure 12 are schematic side views illustrating various embodiments herein.

### DETAILED DESCRIPTION

In order to better appreciate the embodiments herein, the following description is provided. According to the background section, a problem may be related to how to provide a flexible joint which reduces forces that the struts are exposed to. While there exist many different kinds of joints, e.g. ball joints may provide a flexible connection. However, ball joints are typically prone to pop-out, in case they are exposed to forces greater than their pull-out strength. Pull-out strength is a measure, e.g. in Newtons, how large pull-out forces the ball joint is supposed to withstand. Generally, a larger ball joint would resist greater pull-out forces. Disadvantageously, a larger ball joint would likely require a very wide strut, which would impar water resistance. There is thus a need for a solution that is both prone to pull-out forces and that achieves a low water resistance. A dimensioning of the ball joint as a trade-off between these opposing requirements may be achieved. However, as shall be understood from the following description of the embodiments of the invention, the present inventor applies a different approach.

Throughout the following description, similar reference numerals have been used to denote similar features, such as elements, parts, hydrofoils, struts or the like, when applicable.

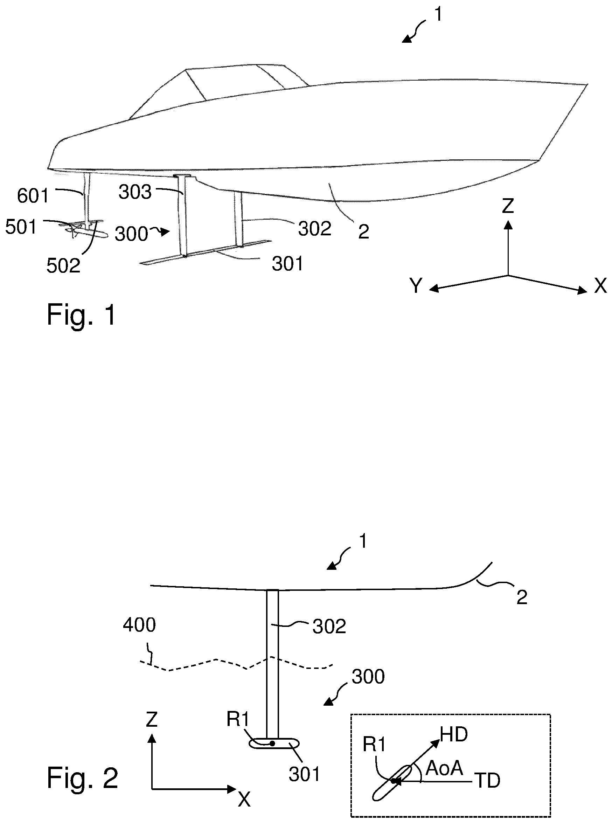

Figure 1 depicts an exemplifying hydrofoil watercraft 1, such as a pleasure boat, a passenger boat etc. with a fully submergible hydrofoil. The hydrofoil watercraft 1 is shown with reference to a cartesian coordinate system having three orthogonal axes X, Y and Z-axis with corresponding reference numerals. The X-axis is horizontal and parallel to a direction of straight forward travel of the watercraft. Titling or rotation of the hydrofoil watercraft 1 about the X-axis is commonly referred to as roll. Hence, the X-axis may be referred to as the roll axis X. The Y-axis is horizontal. Titling or rotation of the hydrofoil watercraft 1 about the Y-axis is commonly referred to as pitch. Hence, the Y-axis may be referred to as the pitch axis Y. Likewise, titling or rotation of the hydrofoil watercraft 1 about the Z-axis is commonly referred to as yaw. Hence, the Z-axis, which is vertical, may be referred to as the yaw axis Z.

The watercraft 1 comprises a hull 2, which e.g. at least partly faces and is at least partly submerged into the water when the watercraft 1 is at rest, or advances without entering foiling advancement (which was described in the background section). The hull 2 may be made of fiberglass or the like.

The hydrofoil watercraft 1 further comprises a hydrofoil 301 arranged to allow the hydrofoil watercraft 1 to be advanced in the foiling advancement, in which the hull 2 is spaced apart from a water surface. The hydrofoil 301 may be made of fiberglass or the like. The hydrofoil 301 may or may not include enforcements, made of steel, brass or the like.

Moreover, the hydrofoil watercraft 1 comprises a hydrofoil adjustment arrangement 300 arranged to adjust an angle of attack of the hydrofoil 301 by a primary rotation of the hydrofoil 301 about a first rotation axis R1 (shown in Figure 2) parallel with the pitch axis Y of the hydrofoil watercraft 1. In this manner, e.g. by adjusting the angle of attack, a distance between the water surface and the hull 2 may be adjusted during the foiling advancement.

Furthermore, the hydrofoil adjustment arrangement 300 comprises two struts 302, 303 connecting the hydrofoil 301 to the hull 2. The struts may be made of fiberglass or the like. The struts may or may not include enforcements, made of steel, brass or the like. The two struts 302, 303 are adapted to allow the hydrofoil 301 to be fully submerged during the foiling advancement. This means for example the hydrofoil 301 has a certain profile adapted for full submerging and/or that the length of the struts is adapted so that the hydrofoil 301 is sufficiently spaced away from the water surface. Accordingly, the hydrofoil 301 is adapted to be fully submerged in water during the foiling advancement. It may here be noted that also roll stability may be controlled e.g. by setting different angles of attack at different ends of the hydrofoil 301.

Typically, the hydrofoil watercraft 1 may also be equipped with a propelling unit 501, such as a propeller, a waterjet or the like, and a rear strut 601 connecting the propeller unit 501 to the hull 2. A motor for driving the propelling unit may be located in the lower end of the rear strut 601 or at an upper end thereof, e.g. inside the hull. The rear stut 601 may also operate as a rudder, e.g. by turning thereof about the Z-axis. In this manner, yaw of the hydrofoil watercraft 1 may be controlled.

The hydrofoil watercraft 1 may typically be provided with a rear hydrofoil 502, e.g. manoeuvrably mounted at the distal end of the rear strut 601.

During the foiling advancement, as shown in Figure 2, the hull 2 is lifted out of the water and is spaced away from the water surface 400. The strut 302, and any further struts, carries the watercraft 1 thanks to lift forces, acting on e.g. the hydrofoil 301.

Moreover, the angle of attack, or hydrofoil tilt or the like, is commonly used for denoting an angle illustrated in Figure 2. The angle of attack may e.g. be given by an angle between a hydrofoil direction HD, e.g. along a chord of the hydrofoil, and direction TD of waterflow relatively the hydrofoil 301. The angle of attack implies a rotation about the first rotation axis R1.

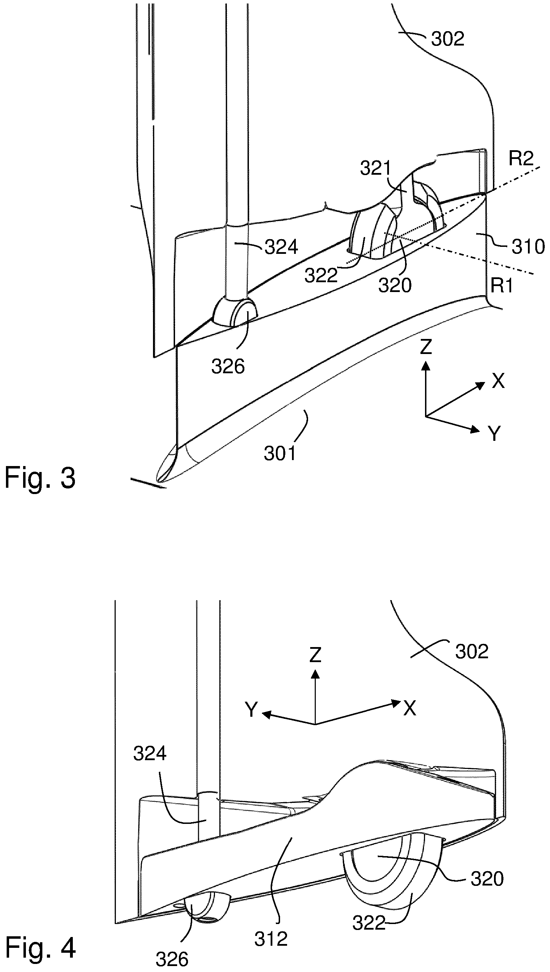

As shown, with reference to Figure 3 and Figure 4, a respective truncated head 320 connects each strut 302, 303 of the two struts 302, 303 to the hydrofoil 301. The respective truncated head 320 may be made of steel or the like. In the example of Figure 3 and Figure 4, the respective truncated head 320 is partly enclosed by a first portion 312 (illustrated in Figure 4) of the respective strut 302. As used herein, the term "head" may refer to a spherical element, a spherical dome, a spherical segment, a spherical cap, a truncated spherical segment cut-off by two parallel planes, a ball of a joint or the like.

In Figure 3, there is shown a second portion 310. For the purpose of this description, it may be noted that the respective strut 302 has a distal end and a proximal end. The hydrofoil 301 is connected to the respective strut 302 of said two struts, at the respective distal end thereof. The distal end is thus distal with respect to the hull 2. The hull 2 is connected to the respective strut 302 at the proximal end. The proximal end is thus proximal with respect to the hull 2. The first and second portions 312, 310 may be made of steel or the like. In this example, the second portion 310 is separate from the hydrofoil 301. In this manner, the strut adjustment arrangement 300 may be adapted to different hydrofoils 301 by that the second portion 310 may e.g. be adapted to different cross-section profiles of the hydrofoil 301, to different mechanism for fastening of the hydrofoil 301 to the strut adjustment arrangement 300. In other examples, the second portion 310 may form an integrated portion of the hydrofoil 301. In this manner, fewer parts may be required and thus material costs may be reduced.

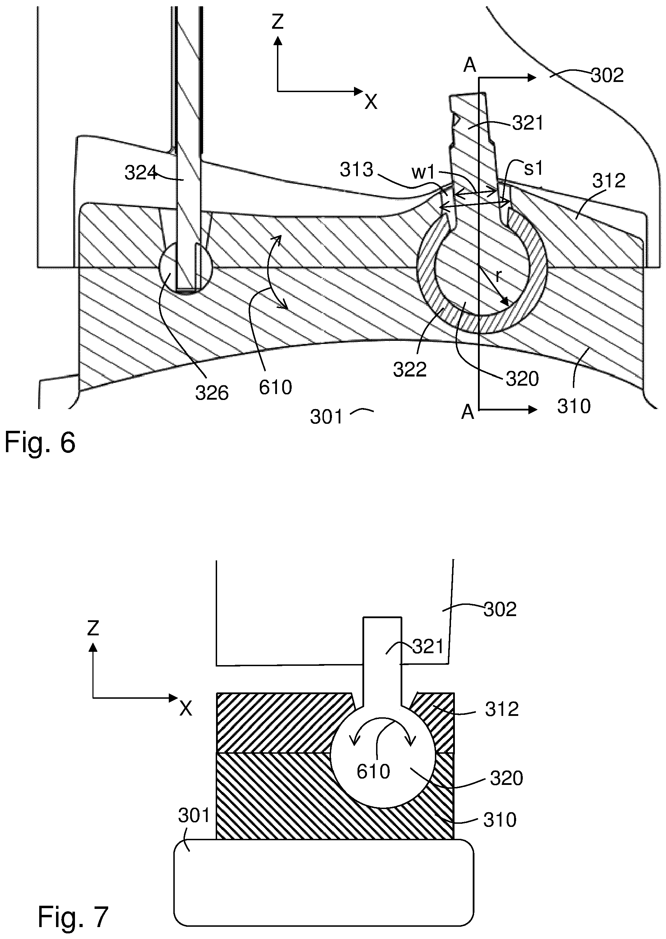

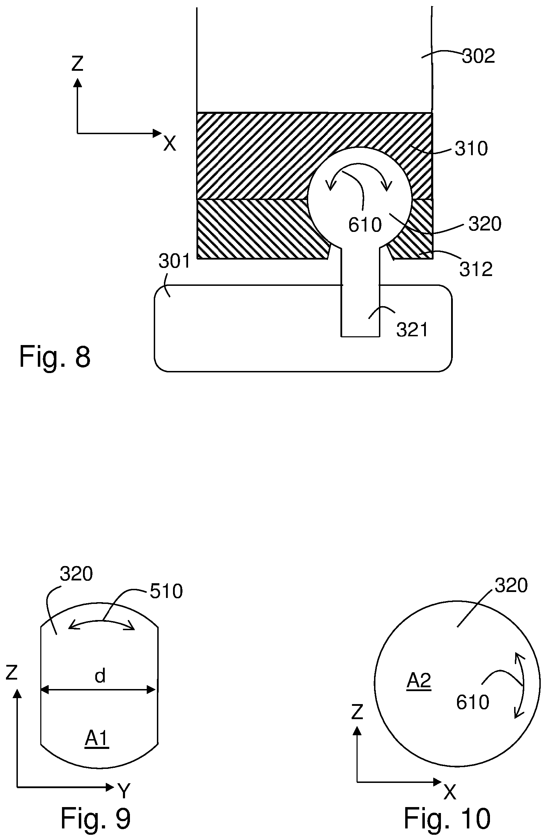

The first portion 312 forms at least a part of a socket adapted to accommodate the respective truncated head 320, preferably in a form-fitted manner. The socket is further described with reference to Figure 7 and Figure 8. An arm 321 of the head 320 extends through the first portion 312. The arm 321 is fixedly connected to the respective strut 302. The first portion 312 is fixedly connected to the hydrofoil 301, e.g. via the second portion 310. In this manner, an articulated joint is formed by at least the respective truncated head 320 and the first portion 312 that is resistant to pull forces, e.g. forces in a direction opposite to the direction of the Z-axis.

The respective truncated head 320 is arranged to allow at least the primary rotation and a secondary rotation about a second rotation axis R2 parallel with a roll axis X of the hydrofoil watercraft 1. As a result, the angle of attack of the hydrofoil 301 may be adjusted, while the hydrofoil 301 is allowed to bend, e.g. in the YZ-plane, at least to some extent without exposing the respective strut 302 to considerable force. The respective truncated head 320 is also described with reference to Figure 9 and Figure 10.

Furthermore, in the example of Figure 3 and Figure 4, the respective truncated head 320 is received by, and preferably at least partly enclosed by, a bearing 322, in a form-fitted manner. The bearing 322 may be made of a suitable bearing material, which has a suitably low friction, e.g. a plastic material, bronze or other metal bearing or the like. Consequently, friction between the respective truncated head 320 and the socket may be reduced. An advantage may also be that the bearing may easily be replaced when worn out. In some examples, the bearing 322 may be omitted.

According to the embodiments herein, there is thus provided a hydrofoil watercraft 1 comprising a hydrofoil adjustment arrangement 300 that reduces strain on the struts and that is small and compact enough to fit within the width of the struts.

Additionally, for the purpose of adjusting the angle of attack, the hydrofoil adjustment arrangement 300 may comprise a respective adjustment rod 324, running in the respective strut 302, 303. The respective adjustment rod 324 is thus, in this example, arranged to adjust the angle of attack of the hydrofoil 301 by being connected to the hydrofoil 301 at a distance from the respective head 320 and movable in a longitudinal direction of the respective strut 302, 303 to cause the primary rotation. A first range of the primary rotation is dependent on how much the respective adjustment rod 324 is movable in the longitudinal direction.

Similarly, as the respective truncated head 321, the adjustment rod 324 comprises a truncated ball 326, or sphere, at its distal end. Therefore, a respective cavity of the first and second portions 312, 310 forms a rod socket which partly encloses the truncated ball 326. In other examples, the rod socket may be formed by a first and second rod socket part (not shown) that are separate from the first and second portions 312, 310.

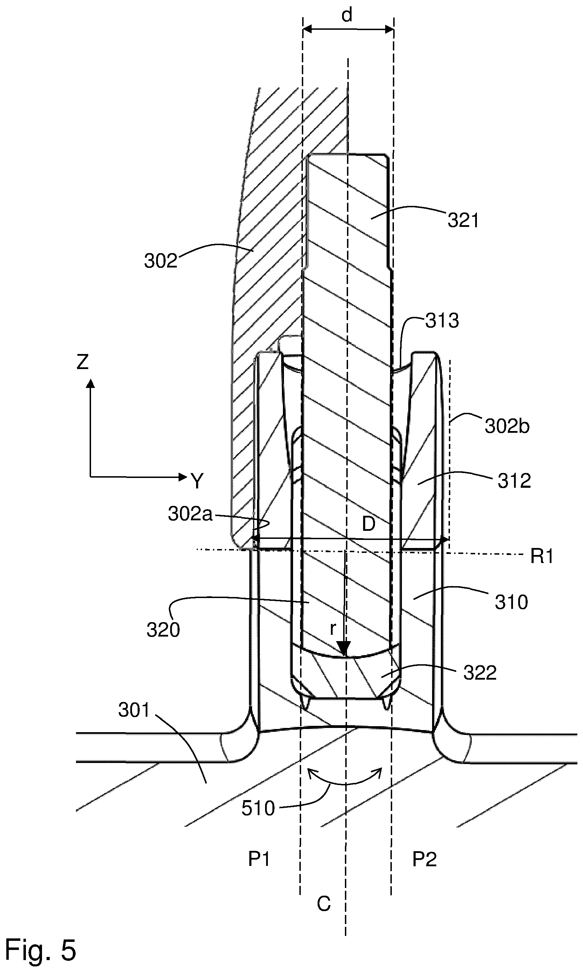

Figure 5 further illustrates that the respective truncated head 320 is adapted to be accommodated within a width D of the respective strut 302, 303 at, and preferably along, the first rotation axis R1 by that the respective truncated head 320 is truncated perpendicularly to the first rotation axis R1. Thus, the width D may be measured at the first rotation axis R1 and along said first rotation axis R1. In Figure 5, which is the cross-section indicated by A-A in Figure 6,, the width D is shown as an inner width between inner walls 302a, 302b of a cavity in the distal end of the respective strut 302. As in the illustrated example, the cavity houses the first portion 312, at least to some extent. As a comparison, it may be noted that the thus formed articulated ball joint withstands higher pull-out forces than an imaginary ball joint with a non-truncated head, fitting within the width D. A reason for this is that the resistance to pull-out forces is proportional to an area of a projection of the respective head onto the XY-plane.

In order to allow the primary rotation 610 and the secondary rotation 510, the first portion 312 is provided with a through-hole 313 accommodating the arm 321. This means that the first portion 312 is adapted to allow the primary and secondary rotations 610, 510, e.g. by means of the through-hole 313. Accordingly, there is a play between the arm 321 and the through-hole 313, enabling the primary and secondary rotations 610, 510. The first range of the primary rotation as well as a second range of the secondary rotation 510 is dependent on the play, greater play implies greater range of rotation. Typically, the first range of the primary rotation is greater than the second range of the secondary rotation. A range of rotation refers herein to range of angles from outer extreme positions of the rotation.

As shown in Figure 5, the respective truncated head 320 is truncated by two planes P1, P2. The two planes P1, P2 are perpendicular to the first rotation axis R1. The two planes P1, P2 are located at opposite sides of a central plane C of the truncated ball joint 320. The central plane C is parallel to the two planes P1, P2. A distance d between the two planes P1, P2 is adapted to fit the respective truncated head 320 within the width D of the respective strut 302, 303. The distance d between the two planes P1, P2 is less than 80% of a diameter of the respective head 320, preferably less than 60% of the respective head 320, and more preferably less than 40% of the respective head 320.

The play is also seen in Figure 6, depicting a sideview illustrating the hydrofoil adjustment arrangement 300. The play for the primary rotation 610 is here shown as a difference between an arm width w1 of the arm 321 and a size s1 of the through-hole. The primary rotation 610 is limited by the though hole's 313 extension along the X-axis. When the arm 321 has a circular cross-section the arm width w1 is the diameter of the arm 321. However, the arm 321 may have other shapes of its cross-section, such as oval shape, rectangular or square shape with or without rounded corners, etc. Similarly, when the through-hole 313 has a circular cross-section the size s1 is the diameter of the through-hole 313. However, the through-hole 313 may have other shapes of its cross-section, such as oval shape, rectangular or square shape with or without rounded corners, etc.

Figure 7 is a schematic sideview of the example shown in Figure 2 to Figure 6, in which the respective adjustment rod 324 has been omitted for the sake of simplicity. In an alternative example, shown in Figure 8, the respective truncated head 320 is as mentioned partly enclosed by the first portion 312 of the respective strut 302. Again, the first portion 312 forms at least a part of a socket 315 adapted to accommodate the respective truncated head 320, preferably in a form-fitted manner. An arm 321 of the head 320 extends through the first portion 312. Here, the arm 321 is fixedly connected to the hydrofoil 301 and the first portion 312 is fixedly connected to the respective strut 302, e.g. via the second portion 310. The second portion 310 may or may not be an integral part of the respective strut 302. The arm 321 may be fixed, e.g. mounted, in the respective strut 302 e.g. by a screw, which for example may screwed into the arm 321 through a hole in the respective strut 302 in a suitable direction, e.g. along the X-axis, Y-axis or other suitable direction.

In order to fix the first and second portions 312, 310 together, screws, bolts or the like may be used.

With the example of Figure 7, the screws may preferably extend through the hydrofoil 301 to be easily accessible from a surface of the hydrofoil 301. The surface, i.e. an outer surface, facing away from the respective strut 302. Furthermore, an advantage is that when the first and second portions 312, 310 are fixed to form the socket, the hydrofoil 301 is at the same time fixedly connected the second portion 310.

The example of Figure 8 is also feasible, in which case, e.g. the arm 321 may be fastened to the hydrofoil 301, after the first and second portions 312, 310 and the head 320 have been mounted at the distal end of the strut 302, e.g. by means of screw through both the first and second portions and into the distal end of the strut 302. The arm 321 may for example the fastened by means of a screw running perpendicularly to the longitudinal direction of the arm 321, e.g. in the direction of the X-axis.

Turning to Figure 9 and Figure 10, the respective truncated head 320 presents a first area A1 in a first cross-section, perpendicular to the roll axis X and through the center of the respective truncated head 320, that is less than a second area A2 in a second cross-section, perpendicular to the pitch axis Y and through the center of the respective truncated head 320. Consequently, a plane of the first area A1 may be parallel to the ZY-plane and a plane of the second area A2 may be parallel to the ZX-plane. The arm 321 is not shown in Figure 9 and Figure 10. The same or similar features and appearance as for the respective truncated head 320 also apply to the truncated ball 326 of the adjustment rod 324.

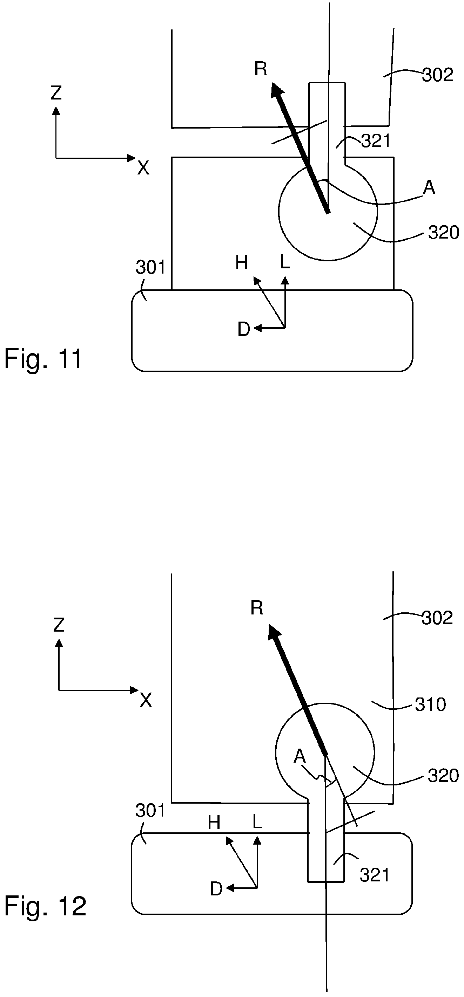

Figure 11 is a simplified illustration of forces for the embodiments in which the head 320 is fixedly mounted to the strut 302. It is commonly known that flow around the hydrofoil 301 causes a resulting force H composed of a lift component L and a drag component D. The resulting force H will in its turn cause a head force R. The head force R will expose the arm 321 to stress, which depends on the angle A between the arm and the longitudinal direction of the arm 321. The magnitudes and angles of forces in the Figure are not drawn to scale, they are depicted for the purpose of illustration only.

Similarly, Figure 12 is a simplified illustration of forces for the embodiments in which the head 320 is fixedly mounted to the hydrofoil 301. Again, it is commonly known that flow around the hydrofoil 301 causes a resulting force H composed of a lift component L and a drag component D. The resulting force H will in its turn cause a head force R. The head force R will expose the arm 321 to stress, which depends on the angle A between the arm and the longitudinal direction of the arm 321. The magnitudes and angles of forces in the Figure are not drawn to scale, they are depicted for the purpose of illustration only.

With regard to strength, it is advantageous to have the arm 321 parallel with the resulting force H. This may be achieved to a higher extent if the head 320 is attached to the strut, rather than to the hydrofoil 301. Since if the head 320 is attached to the hydrofoil 301, the angle of the arm 321 will always be dependent on the angle of attack. Generally, it is strived for a small drag component D, which means that the resulting force H may point slightly backwards, but substantially in the direction of the z-axis. Therefore, as with the example shown e.g. in Figure 11, the arm 321 will point in the same direction all the time, which direction will be at least close to being parallel with the resulting force H. In contrast thereto, with the example of Figure 12, the arm 321 will point in different direction depending on the angle of attack. Thus, with the example of Figure 12, the direction of the arm 321 may deviate more from being parallel with the resulting force H than in the example of Figure 11. In Figure 11, the angle A may thus be in the range of 4-12 degrees, preferably 6-10 degrees, more preferably 7-9 degrees, such as 8 degrees. As seen in Figure 6, the arm 321 itself may be tilted with respect to the vertical Z-axis. The angle at which the arm 321 may be tilted may be 2-8 degrees, more preferably 3-7 degrees, most preferably 4-6 degrees, such as 5 degrees, with respect to the Z-axis due to pitch angle of the watercraft 1 during typical foiling advancement. Thanks to that the arm 321 is tilted strength is improved.

In view of Figure 11 and Figure 12, it may be noted that the respective truncated spherical element 320 is fixedly connected to the respective strut 302, 303 or the respective truncated spherical element 320 is fixedly mounted to the hydrofoil 301.

Even though embodiments of the various aspects have been described, many different alterations, modifications and the like thereof will become apparent for those skilled in the art. The described embodiments are therefore not intended to limit the scope of the present disclosure, which is defined by the appended claims.

## Claims

1. A hydrofoil watercraft (1) comprising:
a hull (2),
a hydrofoil (301) arranged to allow the hydrofoil watercraft (1) to be advanced in a foiling advancement in which the hull (2) is spaced apart from a water surface, and
a hydrofoil adjustment arrangement (300) arranged to adjust an angle of attack of the hydrofoil (301) by a primary rotation of the hydrofoil (301) about a first rotation axis (R1) parallel with a pitch axis (Y) of the hydrofoil watercraft (1), wherein the hydrofoil adjustment arrangement (300) comprises:
two struts (302, 303) connecting the hydrofoil (301) to the hull (2), and
a respective truncated head (320), connecting each strut (302, 303) of the two struts (302, 303) to the hydrofoil (301), wherein the respective truncated head (320) is arranged to allow at least the primary rotation and a secondary rotation about a second rotation axis (R2) parallel with a roll axis (X) of the hydrofoil watercraft (1),
wherein the respective truncated head (320) is adapted to be accommodated within a width (D) of the respective strut (302, 303) at, and preferably along, the first rotation axis (R1) by that the respective truncated head (320) is truncated perpendicularly to the first rotation axis (R1).

2. The hydrofoil watercraft (1) according to claim 1, wherein the respective truncated head (320) is partly enclosed by a first portion (312) of the respective strut (302), wherein the first portion (312) forms at least a part of a socket (315) adapted to accommodate the respective truncated head (320), preferably in a form-fitted manner, wherein an arm (321) of the head (320) extends through the first portion (312), wherein the arm (321) is fixedly connected to the respective strut (302) when the first portion (312) is fixedly connected to the hydrofoil (301) or wherein the arm (321) is fixedly connected to the hydrofoil (301) when the first portion (312) is fixedly connected to the respective strut (302).

3. The hydrofoil watercraft (1) according to any one of the preceding claims, wherein the respective truncated head (320) presents a first area in a first cross-section, perpendicular to the roll axis (X) and through the center of the respective truncated head (320), that is less than a second area in a second cross-section, perpendicular to the pitch axis (Y) and through the center of the respective truncated head (320).

4. The hydrofoil watercraft (1) according to any one of the preceding claims, wherein the respective truncated head (320) is truncated by two planes (P1, P2), wherein the two planes (P1, P2) are perpendicular to the first rotation axis (R1), wherein the two planes (P1, P2) are located at opposite sides of a central plane (C) of the truncated ball joint (320), wherein the central plane (C) is parallel to the two planes (P1, P2), wherein a distance (d) between the two planes (P1, P2) is adapted to fit the respective truncated head (320) within the width (D) of the respective strut (302, 303).

5. The hydrofoil watercraft (1) according to the preceding claims, wherein the distance (d) between the two planes (P1, P2) is less than 80% of a diameter of the respective head (320), preferably less than 60% of the respective head (320), and more preferably less than 40% of the respective head (320).

6. The hydrofoil watercraft (1) according to any one of the preceding claims, wherein a first range of the primary rotation is greater than a second range of the secondary rotation.

7. The hydrofoil watercraft (1) according to any one of the preceding claims, wherein the respective truncated head (320) is received by, and preferably at least partly enclosed by, a bearing (322) in a form-fitted manner.

8. The hydrofoil watercraft (1) according to any one of the preceding claims, wherein the hydrofoil adjustment arrangement (300) comprises:
a respective adjustment rod (324), running in the respective strut (302, 303), wherein the respective adjustment rod (324) is arranged to adjust the angle of attack of the hydrofoil (301) by being connected to the hydrofoil (301) at a distance from the respective head (320) and movable in a longitudinal direction of the respective strut (302, 303) to cause the primary rotation.

9. The hydrofoil watercraft (1) according to any one of the preceding claims, wherein the hydrofoil (301) is adapted to be fully submerged in water during the foiling advancement.

## Patentansprüche

1. Tragflügel-Wasserfahrzeug (1), umfassend
einen Rumpf (2),
einen Tragflügel (301), der dazu angeordnet ist, ein Vorwärtsbewegen des Tragflügel-Wasserfahrzeugs (1) in einer Foiling-Vorwärtsbewegung zu ermöglichen, bei der der Rumpf (2) von einer Wasseroberfläche entfernt ist, und
eine Tragflügel-Einstellanordnung (300), die dazu angeordnet ist, einen Eingriffswinkel des Tragflügels (301) durch eine primäre Rotation des Tragflügels (301) um eine erste Rotationsachse (R1) parallel mit einer Nickachse (Y) des Tragflügel-Wasserfahrzeugs (1) einzustellen, wobei die Tragflügel-Einstellanordnung (300) Folgendes umfasst:
zwei Streben (302, 303), die den Tragflügel (301) mit dem Rumpf (2) verbinden, und
einen jeweiligen abgeschnittenen Kopf (320), der jede Strebe (302, 303) der zwei Streben (302, 303) mit dem Tragflügel (301) verbindet, wobei der jeweilige abgeschnittene Kopf (320) dazu angeordnet ist, mindestens die primäre Rotation und eine sekundäre Rotation um eine zweite Rotationsachse (R2) parallel mit einer Rollachse (x) des Tragflügel-Wasserfahrzeugs (1) zu ermöglichen,
wobei der jeweilige abgeschnittene Kopf (320) dazu ausgelegt ist, innerhalb einer Breite (D) der jeweiligen Strebe (302, 303) an, und vorzugsweise entlang, der ersten Rotationsachse (R1) untergebracht zu werden, indem der jeweilige abgeschnittene Kopf (320) senkrecht zu der ersten Rotationsachse (R1) abgeschnitten ist.

2. Tragflügel-Wasserfahrzeug (1) nach Anspruch 1, wobei der jeweilige abgeschnittene Kopf (320) teilweise von einem ersten Teil (312) der jeweiligen Strebe (302) umgeben ist, wobei der erste Teil (312) mindestens einen Teil einer Halterung (315) bildet, die dazu ausgelegt ist, den jeweiligen abgeschnittenen Kopf (320) unterzubringen, vorzugsweise auf formschlüssige Art und Weise, wobei sich ein Arm (321) des Kopfes (320) durch den ersten Teil (312) erstreckt, wobei der Arm (321) fix mit der jeweiligen Strebe (302) verbunden ist, wenn der erste Teil (312) fix mit dem Tragflügel (301) verbunden ist, oder wobei der Arm (321) fix mit dem Tragflügel (301) verbunden ist, wenn der erste Teil (312) fix mit der jeweiligen Strebe (302) verbunden ist.

3. Tragflügel-Wasserfahrzeug (1) nach einem der vorhergehenden Ansprüche, wobei der jeweilige abgeschnittene Kopf (320) einen ersten Bereich in einem ersten Querschnitt darstellt, vertikal zu der Rollachse (X) und durch den Mittelpunkt des jeweiligen abgeschnittenen Kopfes (320), der kleiner ist als ein zweiter Bereich in einem zweiten Querschnitt, vertikal zu der Nickachse (Y) und durch den Mittelpunkt des jeweiligen abgeschnittenen Kopfes (320).

4. Tragflügel-Wasserfahrzeug (1) nach einem der vorhergehenden Ansprüche, wobei der jeweilige abgeschnittene Kopf (320) von zwei Ebenen (P1, P2) abgeschnitten wird, wobei die zwei Ebenen (P1, P2) senkrecht zu der ersten Rotationsachse (R1) sind, wobei sich die zwei Ebenen (P1, P2) an gegenüberliegenden Seiten einer zentralen Ebene (C) des abgeschnittenen Kugelgelenks (320) befinden, wobei die zentrale Ebene (C) parallel zu den zwei Ebenen (P1, P2) ist, wobei ein Abstand (d) zwischen den zwei Ebenen (P1, P2) dazu ausgelegt ist, dass der jeweilige abgeschnittene Kopf (320) in die Breite (D) der jeweiligen Strebe (302, 303) passt.

5. Tragflügel-Wasserfahrzeug (1) nach einem der vorhergehenden Ansprüche, wobei der Abstand (d) zwischen den zwei Ebenen (P1, P2) weniger als 80 % eines Durchmessers des jeweiligen Kopfes (320), bevorzugt weniger als 60 % des jeweiligen Kopfes (320) und besonders bevorzug weniger als 40 % des jeweiligen Kopfes (320) beträgt.

6. Tragflügel-Wasserfahrzeug (1) nach einem der vorhergehenden Ansprüche, wobei eine erste Spanne der primären Rotation größer ist als eine zweite Spanne der sekundären Rotation.

7. Tragflügel-Wasserfahrzeug (1) nach einem der vorhergehenden Ansprüche, wobei der jeweilige abgeschnittene Kopf (320) von einem Lager (322) auf formschlüssige Art und Weise aufgenommen und bevorzugt mindestens teilweise davon umgeben ist.

8. Tragflügel-Wasserfahrzeug (1) nach einem der vorhergehenden Ansprüche, wobei die Tragflügel-Einstellanordnung (300) Folgendes umfasst:
einen jeweiligen Einstellstab (324), der in der jeweiligen Strebe (302, 303) verläuft, wobei der jeweilige Einstellstab (324) dazu angeordnet ist, den Eingriffswinkel des Tragflügels (301) einzustellen, indem er in einem Abstand von dem jeweiligen Kopf (320) mit dem Tragflügel (301) verbunden und in eine Längsrichtung der jeweiligen Strebe (302, 303) beweglich ist, um die primäre Rotation zu veranlassen.

9. Tragflügel-Wasserfahrzeug (1) nach einem der vorhergehenden Ansprüche, wobei der Tragflügel (301) dazu ausgelegt ist, während der Foiling-Vorwärtsbewegung vollständig in Wasser untergetaucht zu werden.

## Revendications

1. Embarcation à hydroptère (1) comprenant :
une coque (2),
un hydroptère (301) agencé pour permettre à l'embarcation à hydroptère (1) d'avancer dans une progression de planage dans laquelle la coque (2) est maintenue à distance de la surface d'eau, et
un agencement de réglage de l'hydroptère (300) agencé pour régler un angle d'attaque de l'hydroptère (301) par une rotation primaire de l'hydroptère (301) autour d'un premier axe de rotation (R1) parallèle à un axe de tangage (Y) de l'embarcation à hydroptère (1), dans lequel l'agencement de réglage de l'hydroptère (300) comprend :
deux entretoises (302, 303) reliant l'hydroptère (301) à la coque (2), et
une tête tronquée respective (320), reliant chaque entretoise (302, 303) des deux entretoises (302, 303) à l'hydroptère (301), dans lequel la tête tronquée respective (320) est agencée pour permettre au moins la rotation primaire et une rotation secondaire autour d'un deuxième axe de rotation (R2) parallèle à un axe de roulis (X) de l'embarcation à hydroptère (1),
dans lequel la tête tronquée respective (320) est adaptée pour être logée dans une largeur (D) de l'entretoise respective (302, 303) au niveau, et de préférence le long, du premier axe de rotation (R1) par le fait que la tête tronquée respective (320) est tronquée perpendiculairement au premier axe de rotation (R1).

2. Embarcation à hydroptère (1) selon la revendication 1, dans lequel la tête tronquée respective (320) est partiellement enfermée par une première partie (312) de l'entretoise respective (302), dans laquelle la première partie (312) forme au moins une partie d'une douille (315) adaptée pour recevoir la tête tronquée respective (320), de préférence par complémentarité de forme, dans lequel un bras (321) de la tête (320) s'étend à travers la première partie (312), dans laquelle le bras (321) est relié de manière fixe à l'entretoise respective (302) lorsque la première partie (312) est reliée de manière fixe à l'hydroptère (301) ou dans lequel le bras (321) est relié de manière fixe à l'hydroptère (301) lorsque la première partie (312) est reliée de manière fixe à l'entretoise respective (302).

3. Embarcation à hydroptère (1) selon l'une quelconque des revendications précédentes, dans laquelle la tête tronquée respective (320) présente une première zone dans une première section transversale, perpendiculaire à l'axe de roulis (X) et passant par le centre de la tête tronquée respective (320), qui est inférieure à une deuxième zone dans une deuxième section transversale, perpendiculaire à l'axe de tangage (Y) et passant par le centre de la tête tronquée respective (320).

4. Embarcation à hydroptères (1) selon l'une quelconque des revendications précédentes, dans lequel la tête tronquée respective (320) est tronquée par deux plans (P1, P2), dans lequel les deux plans (P1, P2) sont perpendiculaires au premier axe de rotation (R1), dans lequel les deux plans (P1, P2) sont situés sur des côtés opposés d'un plan central (C) de la rotule tronquée (320), dans lequel le plan central (C) est parallèle aux deux plans (P1, P2), dans lequel une distance (d) entre les deux plans (P1, P2) est conçue pour s'adapter à la tête tronquée respective (320) dans la largeur (D) de l'entretoise respective (302, 303).

5. Embarcation à hydroptère (1) selon les revendications précédentes, dans laquelle la distance (d) entre les deux plans (P1, P2) est inférieure à 80 % d'un diamètre de la tête respective (320), de préférence inférieure à 60 % de la tête respective (320), et plus préférablement inférieure à 40 % de la tête respective (320).

6. Embarcation à hydroptère (1) selon l'une quelconque des revendications précédentes, dans laquelle une première plage de la rotation primaire est supérieure à une deuxième plage de la rotation secondaire.

7. Embarcation à hydroptère (1) selon l'une quelconque des revendications précédentes, dans laquelle la tête tronquée respective (320) est reçue par, et de préférence au moins partiellement enfermée par, un appui (322) d'une manière ajustée à la forme.

8. Embarcation à hydroptère (1) selon l'une quelconque des revendications précédentes, dans laquelle l'agencement de réglage de l'hydroptère (300) comprend :
une tige de réglage respective (324), s'étendant dans l'entretoise respective (302, 303), dans laquelle la tige de réglage respective (324) est agencée pour régler l'angle d'attaque de l'hydroptère (301) en étant reliée à l'hydroptère (301) à une distance de la tête respective (320) et mobile dans une direction longitudinale de l'entretoise respective (302, 303) pour provoquer la rotation primaire.

9. Embarcation à hydroptère (1) selon l'une quelconque des revendications précédentes, dans laquelle l'hydroptère (301) est adapté pour être complètement immergé dans l'eau pendant la progression de planage.
